# FASCICULE DE BREVET EUROPEEN

(11) **EP 1 427 136 B1**
(45) Date de publication et mention de la délivrance du brevet: **15.10.2008**
(21) Numéro de dépôt: 03292743.6
(22) Date de dépôt: 03.11.2003
(51) Int. Cl.: H04L 12/24, H04L 12/56

(54) **Dispositif de contrôle d'admission de niveau réseau pour un réseau de communications à protocole de niveau sous-IP**
Vorrichtung zur Zulassungssteuerung in einem sub-IP-basierten Kommunikationsnetzwerk
Apparatus for admission control in an sub-IP-based communication network

(30) Priorité: 14.11.2002 FR 0214227
(43) Date de publication de la demande: 09.06.2004
(73) Titulaire: Alcatel Lucent, 75008 Paris (FR)
(72) Inventeur: Galand, Damien, 92370 Chaville (FR)
(74) Mandataire: Korakis-Ménager, Sophie

(56) Documents cités:
- EP-A- 0 999 674
- EP-A- 1 089 506
- US-A1- 2002 097 674
- GODERIS D ET AL: "TOWARDS AN INTEGRATED SOLUTION FOR MULTIMEDIA OVER IP" ELECTRICAL COMMUNICATION, ALCATEL. BRUSSELS, BE, no. 2, 1 avril 2001 (2001-04-01), pages 97-104, XP001065319 ISSN: 0013-4252

## Description

L'invention concerne le domaine des communications entre terminaux via des réseaux de communications, et plus particulièrement le contrôle de la continuité d'un service dans le cas de communications impliquant des réseaux de types différents.

L'établissement d'une communication entre deux terminaux distants s'effectue souvent par l'intermédiaire de plusieurs réseaux de communications raccordés les uns aux autres par des routeurs périphériques (ou « edge routers ») ou des routeurs de frontière (ou « border routers »). Un tel établissement ne pose généralement pas de problème lorsque la communication n'est pas associée à un niveau de service particulier, ou lorsque la continuité du service associé à la communication n'est pas requise. Mais, cette dernière situation est de moins en moins fréquente du fait de la grande disparité des réseaux et de leurs équipements.

En effet, parmi les équipements de réseau couramment utilisés et susceptibles de coexister lors d'une communication, on peut notamment citer les routeurs IP, les routeurs à multiplexage de longueurs d'onde, tels que les dispositifs DWDM, les multiplexeurs d'insertion/extraction (ou ADMs pour « Add-Drop Multiplexors »), les brasseurs photoniques (ou PXCs pour « Photonic Cross Connects »), ou les brasseurs optiques (ou OXCs pour « Optical Cross Connects »).

De même, parmi les réseaux couramment utilisés et susceptibles d'être impliqués dans une communication, on peut notamment citer ceux qui appartiennent à la première famille des réseaux dits « à commutation de paquets » et ceux qui appartiennent à la seconde famille des réseaux dits « à commutation de niveau non paquet » (ou « none-packet switching »).

Les réseaux de la première famille utilisent des protocoles de niveau 3 dans le modèle en couches OSI (également appelés protocoles de niveau IP, ou plus simplement protocoles Internet (ou IP)). Ils constituent ce que l'on a l'habitude d'appeler l'Internet.

Les réseaux de la seconde famille utilisent des protocoles de niveau 2 dans le modèle en couches OSI (également appelés protocoles de niveau sous-IP (ou « sub-IP »)). La seconde famille peut en outre être subdivisée en au moins trois sous-familles. Une première sous-famille est constituée des réseaux à commutation spatiale, une deuxième sous-famille est constituée des réseaux à multiplexage temporel (ou TDM pour « Time Division Multiplexing »), comme par exemple les réseaux SONET et SDH, et une troisième sous-famille est constituée des réseaux à multiplexage de longueurs d'onde (ou WDM pour « Wavelength Division Multiplexing »).

EP 1 089 506 A décrit un système selon le préambule de la revendication 1, dans laquelle le contrôle d'admission est effectué au niveau des liens par chaque noeud de coeur CAP ou CIP du chemin d'une connexion.

Afin de permettre l'établissement de communications via des réseaux IP différents (appartenant à la première famille), il a été proposé de raccorder chaque système de gestion de réseau (ou NMS pour « Network Management System »), qui gère les équipements d'un réseau IP, à un dispositif de contrôle d'admission de niveau réseau. Un tel dispositif de contrôle est chargé, lorsqu'il reçoit une demande de transfert, via son réseau IP, d'un appel associé à au moins un critère de service et désignant un autre réseau IP raccordé à son propre réseau IP, de vérifier s'il existe des ressources disponibles qui satisfont au(x) critère(s) de service associé(s) à l'appel à transférer. Ainsi, lorsque de telles ressources existent, le dispositif de contrôle peut adresser à son tour la demande de transfert d'appel au dispositif de contrôle qui est raccordé au système de gestion de réseau chargé de gérer les équipements du réseau IP désigné, de sorte qu'il puisse procéder à une éventuelle vérification au sein de son propre réseau IP.

Une telle solution est décrite par Goderis et al. "Towards an integrated solution for multimedia over IP", Alcatel Telecommunications Review, n°2, 1 avril 2001 (XP 001065319).

On entend ici par « demande de transfert d'appel via un réseau », le fait d'établir au sein d'un premier réseau un « pont » entre deux autres réseaux, en mettant à disposition certaines ressources de l'une des liaisons de ce premier réseau.

Grâce à ce type de dispositif de contrôle, il est donc possible de garantir la continuité et la qualité du service associé à une communication lorsque les réseaux IP impliqués dans cette communication sont différents. Mais, il est également possible de garantir à un abonné la sécurité du service, laquelle consiste à authentifier et/ou crypter une communication.

Mais, il n'existe pas de solution connue permettant de garantir la continuité et la qualité du service, ainsi qu'éventuellement la sécurité du service, associés à une communication lorsque l'établissement de cette communication implique des réseaux de types différents, c'est-à-dire appartenant à des sous-familles de la seconde famille (dite famille sous-IP) ou à des familles différentes.

L'invention a donc pour but de remédier à cet inconvénient.

Elle propose à cet effet un système conforme à la revendication 1.

Ainsi, il est désormais possible de garantir la continuité du service et la qualité du service, ainsi qu'éventuellement la sécurité du service (cryptage et/ou authentification), associés à une communication lorsque l'établissement de cette communication implique des réseaux de types différents, c'est-à-dire appartenant à des sous-familles de la seconde famille ou à des familles différentes.

Préférentiellement, le critère de service est choisi dans un groupe comprenant au moins la qualité de service, l'aptitude à la protection/restauration de liaison, et la sécurité du service. L'aptitude à la protection / restauration est typiquement une indication d'un délai minimum garanti pour mettre en place des ressources de protection / restauration en cas de défaillance dans le réseau.

Egalement de préférence, les moyens de contrôle peuvent être agencés de manière à stocker dans une mémoire les données d'information reçues, sous la forme d'une matrice de connectivité entre les différents routeurs de frontière du premier réseau sous-IP (c'est cette mémoire qui sera consultée pour savoir si suffisamment de ressources sont disponibles dans le réseau sous-IP pour le service désiré).

Par ailleurs, les moyens de contrôle du dispositif selon l'invention sont préférentiellement susceptibles d'être couplés à un autre dispositif de contrôle, raccordé au système de gestion de réseau (NMS) qui gère un troisième réseau de communications raccordé au premier réseau sous-IP et d'un type différent (IP ou sous-IP), et duquel est issu la demande de transfert d'appel.

L'invention porte également sur un équipement de réseau, comme par exemple un serveur, susceptible d'être raccordé à un système de gestion de réseau (NMS) gérant un réseau de communications à protocole de niveau sous-IP, et équipé d'un dispositif de contrôle d'admission de niveau réseau du type de celui présenté ci-avant.

L'invention s'applique tout particulièrement, bien que de façon non restrictive, aux réseaux de communications sous-IP choisis parmi les réseaux à commutation spatiale, les réseaux à commutation de longueurs d'onde (WDM), les réseaux TDM, et en particulier les réseaux SONET et SDH, et les réseaux GMPLS (pour « Generalized MultiProtocol Label Switching »).

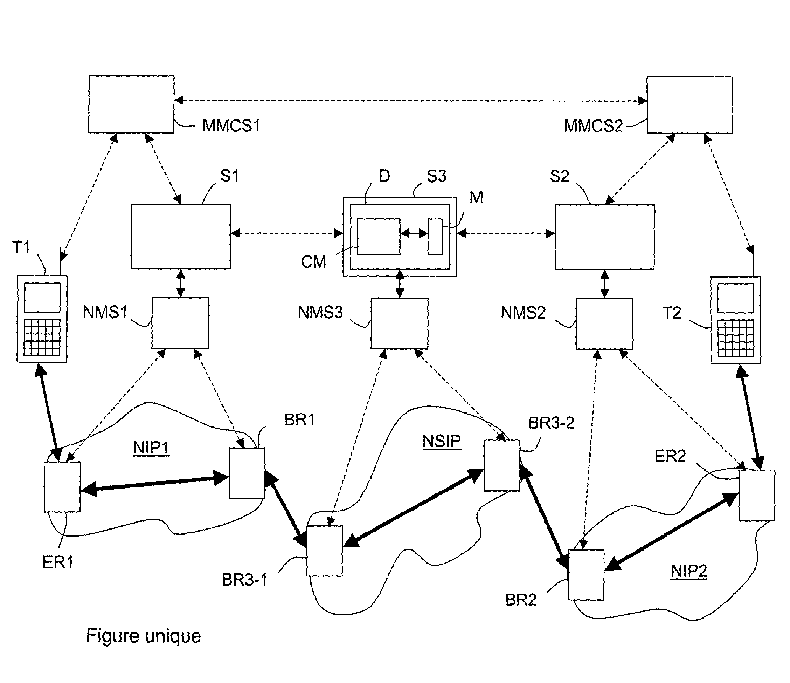

D'autres caractéristiques et avantages de l'invention apparaîtront à l'examen de la description détaillée ci-après, et de l'unique figure annexée qui illustre de façon schématique un exemple d'installation de communications équipée d'un dispositif de contrôle selon l'invention. Cette figure pourra non seulement servir à compléter l'invention, mais aussi contribuer à sa définition, le cas échéant.

L'installation de communications illustrée, à titre d'exemple, sur l'unique figure comporte trois réseaux de communications de types différents. Plus précisément, dans cet exemple l'installation comporte tout d'abord un premier réseau public de données, à protocole de niveau 3 selon le modèle OSI (ou protocole de niveau IP), ci-après appelé premier réseau IP (NIP1), un deuxième réseau public de données, également à protocole de niveau 3 selon le modèle OSI, ci-après appelé second réseau IP (NIP2), et éventuellement d'un type différent de NIP1, et un troisième réseau public de données, à protocole de niveau 2 selon le modèle OSI (ou protocole de niveau sous-IP), ci-après appelé réseau sous-IP (NSIP).

Par exemple, le réseau sous-IP NSIP est un réseau à multiplexage temporel (ou TDM pour « Time Division Multiplexing »), comme par exemple un réseau SONET ou SDH. Mais, il pourrait s'agir de tout autre type de réseau sous-IP de niveau 2, comme par exemple un réseau à commutation spatiale ou un réseau à multiplexage de longueurs d'onde (ou WDM pour « Wavelength Division Multiplexing »), ou d'un réseau sous-IP de niveau dit 2,5, comme par exemple un réseau GMPLS (pour « Generalized MultiProtocol Label Switching »).

Le premier réseau IP NIP1 est géré par un système de gestion de réseau (NMS1) de type NMS, couplé à un serveur dit « de contrôle d'admission de niveau réseau » S1, également appelé contrôleur d'admission de niveau réseau. Ce serveur S1 est chargé de vérifier, chaque fois qu'il reçoit une demande requérant le transfert d'un appel via le premier réseau IP NIP1, associé à au moins un critère de service et désignant un autre réseau (ici NSIP) raccordé au premier réseau IP NIP1, s'il existe des ressources réseau disponibles, associées aux différentes liaisons précédemment établies (par le NMS1) au sein du premier réseau IP NIP1 entre ses différents routeurs, qu'ils soient de type « périphériques » (« edge routers ») ER1 ou de type « de frontière » (« border routers ») BR1, qui satisfont au(x) critère(s) de service associé(s) à l'appel à transférer.

Le second réseau IP NIP2 est géré par un système de gestion de réseau (NMS2) de type NMS, couplé à un serveur de contrôle d'admission de niveau réseau S2, chargé de vérifier, chaque fois qu'il reçoit une demande requérant le transfert d'un appel via le second réseau IP NIP2, associé à au moins un critère de service et désignant un autre réseau raccordé au second réseau IP NIP2, s'il existe des ressources réseau disponibles, associées aux différentes liaisons précédemment établies (par le NMS2) au sein du premier réseau IP NIP2 entre ses différents routeurs, qu'ils soient de type « périphériques » (« edge routers ») ER2 ou de type « de frontière » (« border routers ») BR2, qui satisfont au(x) critère(s) de service associé(s) à l'appel à transférer.

On entend ici par « critère de service » tout ce qui a trait au service associé à un appel, et notamment la qualité de service ou l'aptitude à assurer la continuité du service (également appelée protection / restauration) en cas de problème survenu sur une liaison, ou encore la sécurité du service.

La qualité de service (ou QoS) est définie par les caractéristiques d'une ressource, comme par exemple la bande passante offerte ou le niveau de qualité de service (or, argent ou bronze) offert. Ces niveaux de qualité de service résultent d'une classification faite à partir d'un certain nombre de paramètres tels que la bande passante, le délai, la gigue, les pertes, et analogues.

La continuité du service est définie par des paramètres tels que la capacité à pouvoir se protéger d'une discontinuité de service. Concrètement, lors d'un transfert de données, il est habituel de réclamer, en cas de « coupure », une protection / restauration mise en place en moins de 50 ms, par exemple.

La sécurité est la capacité de crypter et/ou d'authentifier une connexion entre deux points d'une matrice de connexion. Il est rappelé ici que la sécurité est considérée comme une ressource réseau. Par ailleurs, c'est le NMSi qui est chargé d'informer le serveur de contrôle Si de la possibilité de crypter et/ou d'authentifier une communication entre deux points de la matrice de connexion.

Chaque NMSi de réseau IP NIPi (ici i = 1 et 2) alimente, de façon statique (notamment dans des phases pré-opérationnelles), le serveur de contrôle Si correspondant en données d'information représentatives des liaisons établies entre les différents routeurs périphériques ERi et de frontière BRi du réseau IP NIPi et des ressources associées à ces liaisons. Ces données permettent ensuite au serveur de contrôle Si de mémoriser l'état d'occupation des ressources de son réseau IP en fonction des demandes de service reçues. Par ailleurs, le NMSi informe régulièrement le serveur de contrôle Si de sorte qu'il puisse aligner sa connaissance de l'état des ressources avec les ressources réelles du réseau IP. Ainsi, chaque serveur de contrôle Si sait à chaque instant quelles ressources sont disponibles dans le réseau IP NIPi qu'il contrôle.

Le réseau sous-IP NSIP est géré par un système de gestion de réseau (NMS3) de type NMS, couplé à un dispositif de contrôle d'admission de niveau réseau D, ici implanté dans un serveur de contrôle S3 raccordé aux serveurs de contrôle S1 et S2 des premier NIP1 et second NIP2 réseaux IP.

Par ailleurs, le réseau sous-IP NSIP est raccordé à des routeurs de frontière BRi des premier NIP1 et second NIP2 réseaux IP par l'intermédiaire de certains de ses routeurs de frontière BR3-k (ici k = 1 et 2).

Le dispositif de contrôle D selon l'invention comprend une mémoire M alimentée par le NMS3 du réseau sous-IP NSIP en données d'information réseau représentatives des liaisons établies entre les différents routeurs de frontière BR3-k (ici k = 1 et 2) du réseau sous-IP NSIP et des ressources associées à ces liaisons. Il est important de noter que cette alimentation de la mémoire se fait selon un mode de type « off line », indépendamment des demandes de vérification de disponibilité de ressources ou des appels. Comme indiqué précédemment, l'alimentation est effectuée dans une phase pré-opérationnelle, mais également de temps en temps pendant toute la durée de vie du réseau concerné.

Par ailleurs, certaines données d'information réseau qui alimentent la mémoire M peuvent désigner le mode de gestion d'une liaison par le serveur NMS3. Parmi ces modes de gestion on peut notamment citer « VPN » (pour « Virtual Private Network »), « Optical VPN » et « IPSec ».

On stocke également dans la mémoire M les données de restauration qui définissent les ressources réseau destinées à remplacer d'autres ressources réseau en cas de problème.

Préférentiellement, les données d'information sont stockées dans la mémoire M sous la forme d'une matrice de connectivité définissant toutes les liaisons établies entre les différents routeurs de frontière BR3-k du réseau sous-IP NSIP, et les ressources associées à ces liaisons ainsi que leurs caractéristiques et leurs états respectifs de disponibilité, mais également les liaisons de restauration et les ressources associées.

Le dispositif de contrôle D selon l'invention comprend également un module de contrôle CM couplé à la mémoire M et chargé de vérifier dans la matrice de connectivité de la mémoire M, chaque fois qu'il reçoit une demande requérant le transfert d'un appel via le réseau sous-IP NSIP, associé à au moins un critère de service et désignant un autre réseau (ici NSIP1 ou NSIP2) raccordé au réseau sous-IP NSIP, s'il existe des ressources disponibles, associées aux différentes liaisons précédemment établies au sein du réseau sous-IP NSIP entre ses routeurs de frontière (ou « border routers ») BR3-k, qui satisfont au(x) critère(s) de service associé(s) à l'appel à transférer.

Le module de contrôle D est capable de prendre en compte la signalisation propre aux réseaux sous-IP, qui provient d'un serveur d'appels multimédia (ou MMCS pour « MultiMedia Call Server ») ou d'un autre module de contrôle (ou serveur de contrôle Si) d'un réseau voisin auquel son réseau sous-IP est raccordé. Il est également capable de prendre en compte des données de protection / restauration dédiées aux réseaux sous-IP et des informations provenant de matrices de communications bidirectionnelles.

Le module de contrôle CM, ainsi qu'éventuellement la mémoire M, peuvent être réalisés sous la forme de circuits électroniques (ou « hardware »), de modules logiciels ou informatiques (ou « software »), ou d'une combinaison de circuits et de logiciels.

On va maintenant décrire un exemple d'utilisation de l'installation de communications illustrée sur l'unique figure. Dans cet exemple, on suppose qu'un premier terminal de communication T1 souhaite échanger des données répondant à deux critères de service, par exemple de type multimédia avec l'assurance de la continuité du service, avec un second terminal de communication T2.

On suppose par ailleurs que les premier T1 et second T2 terminaux sont raccordés à des réseaux de téléphonie public (non représentés), par exemple de type PLMN (pour « Public Land Mobile Network »), tel qu'un réseau UMTS ou i-Mode. Mais, dans une variante, ils pourraient être raccordés à un réseau de type commuté (par exemple RTC pour « Réseau Téléphonique Commuté » ou PSTN pour « Public Switched Telephony Network »), voire même directement à un réseau IP.

On suppose en outre que les terminaux T1 et T2 sont des téléphones mobiles. Mais, il pourrait s'agir, par exemple, d'ordinateurs fixes ou portables, de téléphones fixes, ou d'assistants personnels numériques (ou PDA pour « Personal Digital Assistant »), ou encore de tout type de terminal de communication capable d'échanger des données avec un autre terminal.

Le premier terminal T1 adresse initialement à son réseau de téléphonie UMTS1 une requête demandant l'établissement d'une communication avec le second terminal T2, en vue d'échanger des données multimédia avec l'assurance d'une continuité de service. Le réseau UMTS1 initie alors une procédure destinée à déterminer si le second terminal T2 est disponible, et dans cette hypothèse le chemin qui permettrait d'établir la communication avec ce second terminal T2 tout en satisfaisant aux deux critères de service requis.

Il interroge pour ce faire son serveur MMCS1 qui agit selon le niveau de signalisation, appelé niveau d'appel (ou « call level »), chargé de s'assurer de la compatibilité des deux terminaux T1 et T2 et des services qui leurs sont associés avant d'essayer d'établir une connexion (il est en effet inutile d'essayer d'établir une connexion si le terminal distant (ici T2) est occupé ou si le service demandé par le terminal T1 n'est pas disponible, par exemple).

On suppose que dans l'exemple décrit, le serveur MMCS1 s'est assuré, par une procédure de signalisation au niveau d'appel, des disponibilités du second terminal T2 et du service requis par le premier terminal T1. Par conséquent, il doit initier, par une procédure de signalisation au niveau de connexion, une vérification de la disponibilité des ressources. Pour ce faire, il se connecte au serveur de contrôle S1, du premier réseau IP NIP1, afin de lui demander de vérifier s'il dispose de ressources disponibles qui satisfont aux deux critères de service requis par le premier terminal T1 et qui permettraient le transfert de l'appel vers le réseau sous-IP NSIP. Dans l'exemple illustré, le serveur de contrôle S1 s'aperçoit, en interrogeant sa matrice de connectivité, que certaines ressources de la liaison établie entre le routeur périphérique ER1 et le routeur de frontière BR1 satisfont aux deux critères de service requis.

Le serveur de contrôle S1, sachant que son réseau IP NIP1 est raccordé au réseau sous-IP NSIP, transmet à son serveur de contrôle S3 la demande de vérification de disponibilité de ressources satisfaisant aux deux critères de service requis par le premier terminal T1 et permettant le transfert de l'appel vers le second réseau IP NIP2.

Cette demande de vérification est traitée par le module de contrôle CM du dispositif de contrôle D implanté dans le serveur de contrôle S3. Le module de contrôle CM interroge alors la matrice de connectivité qui est stockée dans la mémoire M, et s'aperçoit, dans l'exemple illustré, que certaines ressources de la liaison établie entre les routeurs de frontière BR1-3 et BR2-3 satisfont aux deux critères de service requis.

Le module de contrôle CM, sachant que son réseau sous-IP NSIP est raccordé au réseau IP NIP2, charge le serveur de contrôle S3 de transmettre au serveur de contrôle S2, du second réseau IP NIP2, la demande de vérification de disponibilité de ressources satisfaisant aux deux critères de service requis par le premier terminal T1 et permettant le transfert de l'appel vers le réseau UMTS2.

Dans l'exemple illustré, le serveur de contrôle S2 s'aperçoit, en interrogeant sa matrice de connectivité, que certaines ressources de la liaison établie entre le routeur de frontière BR2 et le routeur périphérique ER2 satisfont aux deux critères de service requis.

Préférentiellement, en cas de disponibilité des ressources, il n'est pas nécessaire que le serveur de contrôle S2 avertisse le serveur MMCS2 du réseau UMTS2. Il est préférable que cet avertissement soit adressé au serveur MMCS1 en cas d'indisponibilité des ressources. Dans cette situation, le serveur MMCS1 signale ensuite au serveur MMCS2 que la connexion ne peut pas se faire.

Dans l'exemple illustré, les ressources étant disponibles au niveau des trois réseaux de transfert (ou transit) impliqués (NIP1, NSIP et NIP2), le serveur MMCS2 en informe le serveur MMCS1, lequel en informe le réseau UMTS1. Bien entendu, lorsque le premier terminal T1 est directement raccordé au réseau IP NIP1, le MMCS1 informe directement T1 qu'il peut se connecter au second terminal T2. Cela met fin à la procédure de vérification de disponibilité de ressources.

Les ressources satisfaisant aux deux critères de service étant disponibles au sein des trois réseaux qui sont ici impliqués (NIP1, NSIP et NIP2), , une réservation des ressources peut être ensuite effectuée dans chaque réseau et la connexion entre les premier T1 et second T2 terminaux peut être établie via le routeur périphérique ER1 et le routeur de frontière BR1 du premier réseau IP NIP1, les routeurs de frontière BR3-1 et BR3-2 du réseau sous-IP NSIP, et le routeur de frontière BR2 et le routeur périphérique ER2 du second réseau IP NIP2.

La procédure d'établissement de la communication est alors terminée et les deux terminaux T1 et T2 peuvent commencer à échanger des données multimédia en ayant l'assurance de bénéficier de la continuité du service pendant toute le durée de la communication. En effet, en cas de problème sur l'une des liaisons, ils ont la garantie que le réseau de transfert concerné (NIP1, NSIP ou NIP2) mettra immédiatement à leur disposition des ressources équivalentes. En d'autres termes, grâce à l'invention la continuité du service associé à un appel est effectivement assurée sur l'intégralité du chemin reliant un terminal appelant à un terminal appelé, et cela quel que soit le nombre de réseaux de transfert (ou transit) impliqués.

L'invention ne se limite pas au mode de réalisation d'installation, de dispositif de contrôle et de serveur de contrôle décrits ci-avant, seulement à titre d'exemple, mais elle englobe toutes les variantes que pourra envisager l'homme de l'art dans le cadre des revendications ci-après.

Ainsi, l'invention est ni limitée à l'exemple illustré de combinaison de réseaux de téléphonie et de réseaux de données, ni au nombre de réseaux choisi, dès lors qu'au moins deux des réseaux de données sont de types différents et que l'un au moins d'entre eux est un réseau sous-IP.

## Revendications

1. Système de contrôle d'admission pour un ensemble de réseaux de communications,
ledit ensemble de réseaux comprenant un premier réseau à protocole de niveau dit « sous-IP » (NSIP) et un second réseau de communications (NIP2) raccordé audit premier réseau et d'un type différent dudit premier réseau, ledit premier réseau comportant des routeurs de frontière (BR3-k), raccordés entre eux par des liaisons associées à des ressources de caractéristiques connues, et gérés par un premier système de gestion de réseau (NMS3),
ledit système étant **caractérisé en ce qu'**il comprend :
un premier dispositif de contrôle d'admission de niveau réseau (D) incluant des moyens de contrôle (CM) alimentés par ledit système de gestion de réseau (NMS3) en données d'information représentatives desdites liaisons entre routeurs de frontière (BR3-k) dudit premier réseau et des ressources associées, lesdites données d'information incluant des données de restauration qui définissent des liaisons de restauration et des ressources associées, et
un second dispositif de contrôle d'admission de niveau réseau (S2) raccordé à un second système de gestion de réseau (NMS2) gérant ledit second réseau (NIP2),
lesdits moyens de contrôle du premier dispositif de contrôle d'admission étant aptes à recevoir une demande de transfert, via ledit réseau (NSIP), d'un appel associé à au moins un critère de service et désignant ledit second réseau de communications (NIP2), ledit au moins un critère de service incluant l'aptitude à la protection/restauration de liaison, et à déterminer au moyen desdites données d'information si il existe des ressources disponibles satisfaisant audit au moins un critère de service associé audit appel à transférer, et dans l'affirmative adresser ladite demande de transfert d'appel audit second dispositif de contrôle d'admission de niveau réseau (S2), ledit second dispositif de contrôle d'admission étant apte à vérifier s'il existe des ressources réseau disponibles, associées aux liaisons précédemment établies par le second système de gestion de réseau au sein dudit second réseau, satisfaisant audit au moins un critère de service, une réservation desdites ressources n'étant effectuée que si dans chaque réseau impliqué par ledit appel il existe des ressources disponibles satisfaisant audit au moins un critère de service.

2. Système selon la revendication 1, **caractérisé en ce que** ledit au moins un critère de service inclut aussi un critère choisi dans un groupe comprenant la qualité de service et la sécurité.

3. Système selon la revendication 2, **caractérisé en ce que** ladite qualité de service est définie par au moins un paramètre choisi dans un groupe comprenant au moins la bande passante, le délai, les pertes et la gigue.

4. Système selon l'une des revendications 1 à 3, **caractérisé en ce que** certaines desdites données d'information désignent un mode de gestion d'une liaison par ledit système de gestion de réseau (NMS3).

5. Système selon la revendication 4, **caractérisé en ce que** lesdits modes sont choisis dans un groupe comprenant au moins VPN, Optical VPN et IPSec.

6. Système selon l'une des revendications 1 à 5, **caractérisé en ce que** le premier dispositif de contrôle d'admission comprend une mémoire (M), et **en ce que** lesdits moyens de contrôle (CM) sont agencés pour stocker dans ladite mémoire (M) les données d'information reçues, sous la forme d'une matrice de connectivité entre routeurs de frontière (BR3-k) du premier réseau (NSIP).

7. Système selon l'une des revendications 1 à 6, **caractérisé en ce que** lesdits moyens de contrôle (CM) sont propres à être couplés à un troisième dispositif de contrôle (S1), raccordé à un troisième système de gestion de réseau (NSMS1), gérant un troisième réseau de communications (NIP1) raccordé au premier réseau sous-IP (NSIP) et d'un type différent, et duquel est issu ladite demande de transfert d'appel.

8. Système selon l'une des revendications 1 à 7, **caractérisé en ce que** l'un au moins desdits second (NIP2) et troisième (NIP1) réseaux est à protocole de niveau IP.

9. Système selon l'une des revendications 1 à 8, **caractérisé en ce que** l'un au moins desdits second (NIP2) et troisième (NIP1) réseaux est à protocole de niveau sous-IP.

10. Système selon l'une des revendications précédentes, dans lequel ledit premier réseau est choisi dans un groupe comprenant les réseaux à commutation spatiale, les réseaux à commutation de longueur d'onde, les réseaux TDM, et les réseaux GMPLS.

## Claims

1. An admission control system for a set of communications networks,
said set of networks comprising a first network using a protocol at a "sub-IP" level (NSIP) and a second communications network (NIP2) connected to said first network and of a different type to said first network, said first network comprising border routers (BR3-k) interconnected by links associated with resources of known characteristics and managed by a first network management system (NMS3),
the system being **characterized in that** it comprises:
a first network level admission control apparatus (D) including control means (CM) fed by said network management system (NMS3) with data representative of said links between border routers (BR3-k) of said first network and of the associated resources, said data including restoration links and associated resources, and
a second network level admission control apparatus (S2) connected to a second network management system (NMS2) managing said second network (NIP2),
said control means of the first admission control apparatus being suitable for receiving a request to transfer a call via said network (NSIP), which call is associated with at least one service criterion and designates said second communications network (NIP2), said at least one service criterion including the ability to protect/restore the link, and to determine whether available resources exist that satisfy said at least one service criterion associated with said call to be transferred, and if so to forward said call transfer request to said second network level admission control apparatus (S2), said second admission control apparatus being suitable for verifying whether available network resources exist, associated with links previously established by the second network management system at the center of said second network, satisfying said at least one service criterion, with said resources being booked only if resources are available satisfying said at least one service criterion in each of the networks involved by said call.

2. A system according to claim 1, **characterized in that** said at least one service criterion also including a criterion selected from a group comprising quality of service and security.

3. A system according to claim 2, **characterized in that** said quality of service is defined by at least one parameter selected from a group comprising at least passband, delay, losses, and jitter.

4. A system according to any one of claims 1 to 3, **characterized in that** some of said data specifies a mode of management for a link by said network management system (NMS3).

5. A system according to claim 4, **characterized in that** said modes are selected from a group comprising at least VPN, optical VPN, and IPSec.

6. A system according to any one of claims 1 to 5, **characterized in that** the first admission control apparatus includes memory (M), and **in that** said control means (CM) are arranged to store received data in said memory (M) in the form of a connectivity matrix between border routers (BR3-k) of the first network (NSIP).

7. A system according to any one of claims 1 to 6, **characterized in that** said control means (CM) are suitable for being coupled to third control apparatus (S1) connected to a third network management system (NMS1) managing a third communications network (NIP1) connected to the sub-IP first network (NSIP) and of a different type, and from which said call transfer request comes.

8. A system according to any one of claims 1 to 7, **characterized in that** at least one of said second and third networks (NIP2, NIP1) uses an IP level protocol.

9. A system according to any one of claims 1 to 8, **characterized in that** at least one of said second and third networks (NIP2, NIP1) uses a protocol at sub-IP level.

10. A system according to any preceding claim, in which said first network is selected from a group comprising space-division switching networks, WDM networks, TDM networks, and GMPLS networks.

## Patentansprüche

1. System zur Zulassungssteuerung für eine Gruppe von Kommunikationsnetzwerken, wobei die besagte Gruppe von Netzwerken ein erstes Netz mit einem sogenannten "Sub-IP"-Protokoll (NSIP) und ein zweites Kommunikationsnetzwerk (NIP2), welches an das besagte erste Netz angeschlossen ist und dessen Typ sich vom Typ des besagten ersten Netzes unterscheidet, umfasst, wobei das besagte erste Netz Grenzrouter (BR3-k) enthält, welche über Verbindungen, die mit Betriebsmitteln mit bekannten Eigenschaften assoziiert sind, miteinander verbunden sind und von einem ersten Netzwerkmanagementsystem (NMS3) verwaltet werden,
wobei das besagte System **dadurch gekennzeichnet ist, dass** es umfasst:
eine erste Vorrichtung zur Zulassungssteuerung auf der Netzschicht (D), welche Kontrollmittel (CM) umfasst, die von dem besagten Netzwerkmanagementsystem (NMS3) mit Informationsdaten, die für die besagten Verbindungen zwischen Grenzroutern (BR3-k) des besagten ersten Netzes und den dazugehörigen Betriebsmitteln repräsentativ sind, versorgt werden, wobei die besagten Informationsdaten Wiederherstellungsdaten enthalten, welche dazugehörige Wiederherstellungsverbindungen und Betriebsmittel definieren, und
eine zweite Vorrichtung zur Zulassungssteuerung auf der Netzschicht (S2), welche an ein zweites Netzwerkmanagementsystem (NMS2), welches das besagte zweite Netz (NIP2) verwaltet, angeschlossen ist,
wobei die besagten Mittel zur Steuerung der ersten Vorrichtung zur Zulassungssteuerung fähig sind, über das besagte Netz (NSIP) eine Weiterleitungsanfrage für einen Ruf, der mit mindestens einem Dienstkriterium, welches das besagte zweite Kommunikationsnetzwerk (NIP2) bezeichnet, assoziiert ist, zu empfangen, wobei das besagte mindestens eine Dienstkriterium die Fähigkeit, die Verbindung zu schützen/wiederherzustellen und anhand der besagten Informationsdaten zu ermitteln, ob Betriebsmittel verfügbar sind, welche das den besagten weiterzuleitenden Ruf betreffende mindestens eine Dienstkriterum erfüllen, und wenn dies der Fall ist, die besagte Rufweiterleitungsanfrage an die besagte zweite Vorrichtung zur Zulassungssteuerung auf der Netzschicht (S2) zu senden, umfasst, wobei die besagte zweite Vorrichtung zur Zulassungssteuerung fähig ist, zu prüfen ob Netzbetriebsmittel zur Verfügung stehen, die mit zuvor von dem zweiten Netzwerkmanagementsystem innerhalb des besagten zweiten Netzes aufgebauten Verbindungen assoziiert sind und das besagte mindestens eine Dienstkriterium erfüllen,
wobei eine Reservierung der besagten Betriebsmittel nur erfolgt, wenn in jedem von dem besagten Ruf betroffenen Netz Betriebsmittel, welche das besagte mindestens eine Kriterium erfüllen, verfügbar sind.

2. System nach Anspruch 1, **dadurch gekennzeichnet, dass** das besagte mindestens eine Dienstkriterum ebenfalls ein in einer Gruppe, welche die Dienstgüte und die Sicherheit umfasst, gewähltes Kriterium umfasst.

3. System nach Anspruch 2, **dadurch gekennzeichnet, dass** die besagte Dienstgüte durch mindestens einen Parameter, welcher in einer Gruppe, die mindestens die Bandbreite, die Dauer, die Verluste und den Jitter umfasst, gewählt wird, definiert wird.

4. System nach einem der Ansprüche 1 bis 3, **dadurch gekennzeichnet, dass** einige der besagten Informationsdaten einen Modus für die Verwaltung einer Verbindung durch das besagte Netzwerkmanagementsystem (NMS3) bezeichnen.

5. System nach Anspruch 4, **dadurch gekennzeichnet, dass** die besagten Modi in einer Gruppe, welche mindestens VPN, Optical VPN und IPSec. umfasst, gewählt werden.

6. System nach einem der Ansprüche 1 bis 5, **dadurch gekennzeichnet, dass** die erste Vorrichtung zur Zulassungssteuerung einen Speicher (M) umfasst, und dass die besagten Kontrollmittel (CM) fähig sind, in dem besagten Speicher (M) die empfangenen Informationsdaten in Form einer Vernetzungsmatix zwischen den Grenzroutern (BR3-k) des ersten Netzes (NSIP) zu speichern.

7. System nach einem der Ansprüche 1 bis 6, **dadurch gekennzeichnet, dass** die besagten Kontrollmittel (CM) an eine dritte Steuervorrichtung (S1) gekoppelt werden können, welche an ein drittes Netwerkmanagementsystem (NSMS1) angeschlossen ist, welches ein drittes Kommunikationsnetz (NIP1) verwaltet, das an das erste Sub-IP-Netz (NSIP) angeschlossen ist und dessen Typ verschieden ist, und von welchem die besagte Rufweiterleitungsanfrage gesendet wurde.

8. System nach einem der Ansprüche 1 bis 7, **dadurch gekennzeichnet, dass** mindestens entweder das besagte zweite Netz (NIP2) oder das besagte dritte Netz (NIP1) IP-basiert ist.

9. System nach einem der Ansprüche 1 bis 8, **dadurch gekennzeichnet, dass** mindestens entweder das besagte zweite Netz (NIP2) oder das besagte dritte Netz (NIP1) Sub-IP-basiert ist.

10. System nach einem der vorstehenden Ansprüche, in welchem das besagte erste Netz in einer Gruppe, welche die Netze mit Raumschaltung, die Netze mit Wellenlängenschaltung, die TDM-Netze und die GMPLS-Netze umfasst, gewählt wird.
